# EUROPÄISCHE PATENTSCHRIFT

(11) **EP 2 113 522 B1**
(45) Veröffentlichungstag und Bekanntmachung des Hinweises auf die Patenterteilung: **16.01.2013**
(21) Anmeldenummer: 08008303.3
(22) Anmeldetag: 30.04.2008
(51) Int. Cl.: C08G 18/08, C08J 3/12, C08J 3/22, C08K 3/00, C08K 5/00, C08K 3/22, C08L 75/00, C08L 83/08, C08L 83/10

(54) **Verfahren zur Herstellung eines Farb- Masterbatches, Farb-Masterbatch sowie damit eingefärbter Polymerwerkstoff**
Method for creating a colour master batch, colour master batch and polymer material coloured with same
Procédé de fabrication d'un mélange maître de couleurs, mélange maître de couleurs et matière première polymère colorée à l'aide de celui-ci

(43) Veröffentlichungstag der Anmeldung: 04.11.2009
(60) Teilanmeldung: 11009680.7
(73) Patentinhaber: Deutsche Amphibolin-Werke von Robert Murjahn Stiftung & Co KG, 64372 Ober-Ramstadt (DE)
(72) Erfinder: Röber, Friedhelm, 04668 Pöhsing (DE); Chmielewski, Dietmar, Dr., 40225 Düsseldorf (DE); Radusch, Hans-Joachim, Prof. Dr.-Ing., 06667 Weissenfels (DE); Hübner, Matthias, 07745 Jena (DE)
(74) Vertreter: Pfenning, Meinig & Partner GbR

(56) Entgegenhaltungen:
- WO-A-03/018704
- WO-A-2005/097872
- WO-A-2006/084861
- US-A- 5 418 311
- US-A1- 2005 014 878
- US-A1- 2007 299 215
- DATABASE CA [Online] CHEMICAL ABSTRACTS SERVICE, COLUMBUS, OHIO, US; 25. Februar 1995 (1995-02-25), KUMAZAWA, TERUHISA ET AL: "Stable masterbatches of bisphenol-type polycarbonate- polysiloxanes and pigments" XP002496803 gefunden im STN Database accession no. 1995:374635 -& JP 06 145490 A (MITSUBISHI GAS CHEMICAL CO., JAPAN) 24. Mai 1994 (1994-05-24)

## Beschreibung

Die vorliegende Erfindung betrifft ein Verfahren zur Herstellung eines Farb-Masterbatches auf Basis eines thermoplastischen Silikoncopolymers. Weiterhin betrifft die Erfindung einen entsprechenden Farb-Masterbatch. Derartige Farb-Masterbatches finden Verwendung bei der Einfärbung von Polymerwerkstoffen.

Farb-Masterbatches werden derzeit typischerweise aus Kunststoffgranulaten und Farbmitteln hergestellt. Hierfür hat sich am Markt ein eigener Industriezweig gebildet, der sich darauf spezialisiert hat. Die Colorierung erfolgt durch Misch- und Schmelzprozess von Farbmittel und Kunststoffgranulat unter Beimischung geringer Mengen von Additiven im Doppelschneckenextruder. Praktiziert wird sowohl die einstufige als auch die zweistufige Masterbatchherstellung. Während bei der einstufigen Fertigung sofort alle Rohstoffkomponenten vorgelegt und extrudiert werden, führt die zweistufige Fertigung über sog. "Monokonzentrate", die im zweiten Schritt nochmals gemischt, und gegebenenfalls mit Additiven versehen und extrudiert werden. Die Homogenität des Farbtons im Kunststoff hängt davon ab, welches Fließverhalten in der Schmelze erreicht wird bzw. wie gut sich der Masterbatch in der Matrix verteilt. Für jede Kunststoffklasse gibt es daher spezielle Masterbatchtypen.

Eine prinzipielle Problematik der Masterbatchherstellung ist, dass Pigmente, deren Primärpartikel im Größenbereich von wenigen Nanometern bis einigen Mikrometern liegen, in die makromolekularen Werkstoffe im Schmelzemischverfahren eingearbeitet werden müssen. Das Aufschließen der Pigmentaggregate und -agglomerate und das homogene Verteilen der Pigmente in der z.T. sehr hochviskosen Kunststoffschmelze können aber durchaus problematisch sein. Zudem muss ein bereits aufgeschmolzener und granulierter Polymerwerkstoff bei diesem Schmelzecompoundieren erneut aufgeschmolzen und granuliert werden. Dies abhängig vom Verfahren sogar bis zu zweimal. Neben einem hohen energetischen Aufwand, der damit verbunden ist, kann die wiederholte thermische Belastung auch zu einer Schädigung des Masterbatch-Trägermaterials führen in Folge von Kettenabbaureaktionen mit daraus resultierendem Molmassenabbau.

Das Mischverhalten von Farbmitteln in den jeweiligen Kunststoffen ist - vor allem bei höheren Konzentrationen an Pigmenten bzw. Farbstoffen - nicht vorhersehbar, so dass vor allem die Herstellung von Masterbatches oftmals Schwierigkeiten bereitet, da die in einen jeweiligen Kunststoff einzuarbeitenden Farbmittel, also z.B. Pigmente oder Farbstoffe, oftmals verklumpen oder agglomerieren, so dass starke Inhomogenitäten auftreten. Dies führt zu nachteiligen Eigenschaften des Masterbatches, z.B. was rheologische oder mechanische Eigenschaften anbelangt.

US 5 418 311 A offenbart einen Masterbatch enthaltend ein Polysiloxan-Polyharnstoff-Copolymer.

Ein besonders interessanter Kunststoff, der durch seine vorteilhaften Materialeigenschaften ein breites Anwendungsgebiet abdeckt, ist ein Organopolysiloxan/Polyharnstoff/Polyurethan-Blockcopolymer, das in der EP 1 489 129 A1 offenbart ist. Allerdings waren bisher alle Versuche, in dieses Blockcopolymer Farbmittel, vor allem in höheren Konzentrationen einzuarbeiten, erfolglos.

Ausgehend hiervon war es Aufgabe der vorliegenden Erfindung, ein Verfahren zur Herstellung eines Farb-Masterbatches sowie einen entsprechenden Farb-Masterbatch bereitzustellen, wobei sich die Verfahrensführung durch hohe Effizienz und der Farb-Masterbatch durch hohe Kompatibilität gegenüber zugesetzten Farbmitteln und deren eingesetzten Mengen auszeichnen soll.

Bezüglich des Verfahrens wird diese Aufgabe mit den Merkmalen des Anspruchs 1, bezüglich des Masterbatches mit den Merkmalen des Anspruchs 11 gelöst. In Anspruch 14 werden mit dem Farb-Masterbatch gefärbte Polymerwerkstoffe bereitgestellt. Die jeweiligen abhängigen Ansprüche stellen dabei vorteilhafte Weiterbildungen der Erfindung dar. Anspruch 15 nennt eine erfindungsgemäße Verwendung.

Erfindungsgemäß wird ein Verfahren zur Herstellung eines Farb-Masterbatches mit folgenden Schritten bereitgestellt:
a) Mischen mindestens einer mit einer Amino-, Hydroxy- oder Carboxy-Gruppe terminierten Siloxanstruktur der allgemeinen Formel I (Komponente A) : 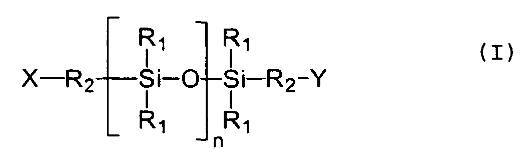 mit
   R₁ unabhängig voneinander ein einwertiger gegebenenfalls durch Fluor oder Chlor substituierter Kohlenwasserstoffrest mit 1 bis 20 Kohlenstoffatomen,
   R₂ unabhängig voneinander ein Alkylenrest mit 1 bis 20 Kohlenstoffatomen, in dem einander nicht benachbarte Methyleneinheiten durch Gruppen -O-ersetzt sein können oder einen Arylenrest mit 6 bis 22 Kohlenstoffatomen, besonders bevorzugt -(CH₂)₃-,
   X und Y unabhängig voneinander eine Hydroxy-, Carboxy- oder Amino-Gruppe -NH₂ und
   n eine Zahl von 1 bis 10000,
      mit mindestens einer bifunktionellen Verbindung (Komponente B), die zwei, mit X und Y durch Polyaddition oder Polykondensation verknüpfbare Gruppen aufweist,
b) Polymerbildung der Mischung der Komponenten A und B sowie
c) Aufschmelzen des Polymerisats im Extruder oder diskontinuierlichen Innenmischer mit anschließender Granulation.

Dabei wird vor Abschluss der Polymerbildung, d.h. vor oder während Schritt b), mindestens ein Farbmittel zugesetzt in eine der flüssigen Vorstufen des Polymers unter Bildung einer Paste.

Die Polymerbildung in Schritt b) erfolgt bevorzugt bei Temperaturen von mindestens 20 °C. Grundsätzlich kann aber auch bei niedrigen Temperaturen gearbeitet werden.

Die Einmischung der Farbmittel erfolgt erfindungsgemäß in die flüssigen Vorstufen der Siloxan-Copolymere. Die homogene Dispergierung von großen Konzentrationen an Farbmitteln in diese relativ niedrigviskosen Systeme ist gut handhabbar und mittels der in der Farben- und Lack-Industrie etablierten Techniken problemlos realisierbar. Die Problematik des Einmischens der Farbmittel in die flüssigen Vorstufen der Polysiloxan-Copolymere ist dabei aber keineswegs als trivial abzutun. Normalerweise werden Polymerwerkstoffe aus Monomeren mit sehr geringen Molmassen aufgebaut. Diese Monomere sind entweder gasförmig, oder flüssig, mit sehr geringen Viskositäten. Die Farbmitteleinarbeitung in polymere Vorstufen, also in die Monomere, ist für die meisten Polymere also gar nicht möglich bzw. nur mit einem sehr großen technischen Aufwand zu realisieren. Daher wird dieser Weg im Allgemeinen auch nicht in der Masterbatchherstellung bestritten. Der Vorteil der Polysiloxan-Copolymere ist, dass die Grundkomponenten keine Monomere im klassischen Sinne sind, sondern eher Oligomere. Besonders die siliziumorganische Verbindung kann sich mit Molmassen von > 10.000 g/mol auszeichnen. Daher hat man es mit den Grundkomponenten der Polysiloxan-Copolymere mit gut handhabbaren Fluiden zu tun. In dem Arbeitsfeld der Polymersynthese kann daher die Einarbeitung von Farbmitteln in eine fluide Vorstufe schon als Neuerung angesehen werden.

Auf Basis der fluiden Vorstufen ist es möglich, Pasten mit den Grundfarbtönen zu erzeugen. Diese Pasten können vor der Polymersynthese zum Endfarbton gemischt werden. Durch anschließendes Ausreagieren der Komponenten zum fertigen Farb-Masterbatch erhält man das Produkt in nur einem Extrusionsschritt. Neben reduzierten Produktionskosten ist der wesentliche Vorteil, dass das Trägermaterial des Farb-Masterbatches nur ein einziges Mal vor dem Endeinsatz thermisch belastet wird. Dadurch verringert sich der Einfluss thermischer Abbaureaktionen auf die Matrix.

Ein weiterer Vorteil des erfindungsgemäßen Verfahrens ist, dass nach der Dispergierung der Farbmittel in die fluide Polymervorstufe eine weitere Dispergierung und Homogenisierung der Farbmittel in der ausreagierten Polymermatrix im Extruder erfolgt. Dadurch wird die Farbmittelverteilung im Farb-Masterbatch zusätzlich verbessert.

Als Farbmittel werden bevorzugt Pigmente, Farbstoffe oder Mischungen hiervon eingesetzt.

Als Pigmente kommen sowohl anorganische als auch organische Pigmente in Frage. Zu den anorganischen Pigmenten gehören solche der Gruppe der Oxide, z.B. Eisenoxid (braun, rot, schwarz), Chromoxid (grün), Titandioxid, oder Kohlenstoff, z.B. Ruß-schwarz, oder Chromate, z.B. Bleichromat-gelb, Molybdatorange, oder Komplexe anorganischer Buntpigmente, z.B. Chromtitangelb, Chromeisenbraun, Kobaltblau, Nickeltitangelb, Zinkeisenbraun, Wismutvanadatgelb, oder Sulfide, z.B. Cadmiumsulfid (gelb, orange, rot), Cersulfid (gelb, orange, rot), Ultramarin (violett, blau), Zinksulfid (weiß). Zu den organischen Pigmenten zählen Azopigmente, z.B. verlackte Azopigmente (gelb, rot), Disazopigmente (gelb, orange, rot), Disazokondensationspigmente (gelb, rot), Benzimidazolpigmente (gelb, orange), Metallkomplexpigmente (gelb), Insoindolinpigmente (gelb), Insoindolinonpigmente (gelb), oder auch polyzyklische Pigmente, z.B. Chinacridon (violett, blau), Chinophthalon (gelb), Diketo-Pyrrolo-Pyrrol (orange, rot, violett), Disoxazinpigmente (violett), Indanthron (blau), Perylen (rot, violet), Phthalocyanin (blau, grün).

Als Farbstoffe kommen sowohl lösliche Farbstoffe, z.B. Anthrachinon, Chinophthalon, Pyrazolon, Perinon und Monoazofarbstoffe, als auch fluoreszierende Farbstoffe, z.B. Perylen, Naphthalimid, Cuminderivate, Thioindigo, Thioxanthen-Benzanthron in Frage.

Erfindungsgemäß wird ebenso ein Farb-Masterbatch bereitgestellt, der nach dem zuvor beschriebenen Verfahren herstellbar ist.

Überraschenderweise hat sich gezeigt, dass der erfindungsgemäße Farb-Masterbatch, der sich nach der erfindungsgemäßen Verfahrensführung herstellen lässt, eine ausgezeichnete Homogenität, d. h. keinen Konzentrationsgradienten des Farbmittels im Masterbatch, aufweist. Als weitere vorteilhafte Eigenschaften des Farb-Masterbatches sind die hohe Zugfestigkeit, die hohe thermische Beständigkeit, ein ausgezeichnetes Spannungs-Dehnungs-Verhalten oder rheologisches Verhalten sowie ein ausgezeichnetes Permeationsverhalten für eine Vielzahl von Stoffen zu nennen. Weiterhin erweist sich der Farb-Masterbatch sehr tolerant gegenüber einer Vielzahl von Kunststoffen, mit denen in für die Kunststoffverarbeitung und -modifizierung üblichen Einsatzkonzentrationen eine gute Verträglichkeit besteht.

Ein entscheidender Vorteil des Farb-Masterbatches in Verbindung mit anderen Kunststoffen ist das bessere Fließverhalten der Matrix in der Schmelze, wodurch gerade komplizierte Spritzgussteile eine bessere und schnellere Spritzformbeladung erfahren und damit eine höhere Wirtschaftlichkeit gegeben ist. Ein weiterer wichtiger Vorteil des Farb-Masterbatches ist es, dass bei Extrusionsanwendungen eine enorme Durchsatzsteigerung erzielt werden kann.

Die erfindungsgemäß eingesetzten Polysiloxan-Copolymere bestehen, wie bereits beschrieben aus zwei bzw. drei Komponenten, aus der Siloxanstruktur A und den organischen Komponenten B und gegebenenfalls C. Generell handelt es sich bei diesen Copolymeren um alternierende Blockcopolymere vom Typ AB (bestehend aus mindestens zwei Blocksequenzen) oder vom Typ ABA (bestehend aus drei Blöcken). Gebildet werden diese Polymere entweder durch Polyadditionsreaktion oder Polykondensationsreaktion unter Abspaltung von z.B. Wasser. Für die Bildung dieser Polymere sind im Allgemeinen zwei bifunktionelle Komponenten erforderlich. Zum einen eine bifunktionelle Komponente A, welche eine organische Siliciumverbindung enthält und zum anderen eine bifunktionelle Komponente B. Die funktionellen Gruppen der Komponente B müssen dabei derart beschaffen sein, dass sie in der Lage sind, mit den funktionellen Gruppen der Komponente A reagieren zu können. Werden Komponente A und Komponente B in stöchiometrischen Verhältnissen, d.h. im molaren Verhältnis 1:1 eingesetzt, bilden sich unter bestimmten Reaktionsbedingungen und gegebenenfalls unter Zugabe eines Katalysators lange Makromoleküle, in denen sich Komponente A und Komponente B abwechseln.

In speziellen Fällen wird in diese Polysiloxan-Copolymere eine dritte Komponente C eingebaut, die auch als Ketten-extender bezeichnet wird. Die Reaktion zum Makromolekül erfolgt in der Regel in zwei Stufen, wobei auch das Einstufenverfahren möglich ist. Zuerst werden wieder Komponente A und Komponente B zur Reaktion gebracht. Allerdings ist das stöchiometrische Verhältnis von A und B so gewählt, dass nur definierte kurze Moleküle mit der exakten Struktur BAB entstehen. Das molare Verhältnis von A zu B beträgt hier 1:2. In einem zweiten, zeitlich nachgelagerten Reaktionsschritt erfolgt dann die Zugabe der Komponente C. Komponente C ist ebenfalls bifunktionell und die funktionellen Gruppen von Komponente C sind in der Lage, mit den funktionellen Gruppen von Komponente B zu reagieren. Bei Reaktion von Komponente C und Komponente B entstehen dann wiederum Makromoleküle mit der Struktur .....BABCBABC.....

Die Siloxanstruktur A ist im Copolymer stark unpolar. Die organischen Komponenten B und C dagegen bringen in das Copolymer polare Gruppen ein. Durch die Variation von unpolaren und polaren Blöcken können die Polysiloxan-Copolymere an verschiedenste Polymerwerkstoffe bezüglich der Verträglichkeit angepasst werden. Die Folge ist, dass aus einem bzw. nur wenigen Basiswerkstoffen Farb-Masterbatches für nahezu alle Polymerwerkstoffe erzeugt werden können. Man kann auf Basis von Polysiloxan-Copolymeren also Universal-Masterbatches für nahezu alle Polymerwerkstoffe, zumindest jedoch jeweils große Polymerwerkstoffgruppen, wie Polyolefine, Polyester, Styrol-basierte Polymere etc. erzeugen.

Neben der universellen Einsetzbarkeit ist ein weiterer Vorteil des Farb-Masterbatches, dass das Polymer nicht nur eingefärbt wird, sondern dass das Farb-Masterbatch-Trägermaterial, also das Polysiloxan-Copolymer, gleichzeitig als Prozesshilfsmittel wirkt. Durch Zugabe des Farb-Masterbatches können bei sonst konstanten Prozessparametern im Spritzgussprozess deutlich die Zykluszeiten gesenkt werden. Im Extrusionsverfahren kann der Durchsatz bei sonst konstanten Bedingungen signifikant gesteigert werden. Das bedeutet in allen Fällen eine Verbesserung der Wirtschaftlichkeit des Verfahrens.

Da Polysiloxan-Copolymere zu den thermoplastischen Elastomeren gehören, können diese Werkstoffe in speziellen Fällen als Zähigkeitsmodifikatoren für andere thermoplastische Werkstoffe wirken. Man kann neben dem Einfärben und verbesserter Verarbeitbarkeit also auch weitere Effekte, wie Zähigkeitsmodifikation mittels dieses Farb-Masterbatches erreichen.

Die Siloxanstruktur ist unpolar. Bei dem Mischen/Verblenden der Polysiloxan-Copolymere mit anderen Polymerwerkstoffen lagern sich die Siloxan-Sequenzen der Copolymere an die Oberfläche der modifizierten Polymerwerkstoffe. Das Ergebnis ist, dass besonders polare Werkstoffe, wie PET oder PA, an der Oberfläche polar abgeschirmt, also unpolar gemacht werden. Das Ergebnis ist, dass Oberflächen stark wasserabweisend ausgerüstet werden können.

Ebenso konnte gezeigt werden, dass die Elastizität von Polymerwerkstoffen selbst bei niedrigen Temperaturen verbessert wird und damit neue Einsatzmöglichkeiten eröffnet werden. Mit der vorgeschlagenen Dispergierung der Pigmente in das Copolymer kann eine fest-flüssig-Dispergierung vorgenommen und z.B. durch Mühlen ein optimaler Aufschluss der Pigmente erfolgen. Dadurch ist Homogenität, Flexibilität für die Endfarbtonformulierung durch Einsatz von Dosiertechnik und optimale Nutzung des Farbstärkevermögens der Pigmente gewährleistet.

Das Farbmittel wird in die noch nicht polymerisierten Komponenten bzw. die entsprechenden Mischungen hieraus eingemischt (vor oder während Schritt a)).

Bezüglich der Verfahrensführung hat sich als vorteilhaft herausgestellt, wenn das mindestens eine Farbmittel, bezogen auf das Gewicht des gebildeten Polymers, in einer Menge von 1 bis 80 Gew.-%, bevorzugt 10 bis 50 Gew.-% zugegeben wird. Insbesondere sind die Farbmittel ausgewählt aus der Gruppe bestehend aus Pigmenten und/oder Farbstoffen.

Vorzugsweise ist die bifunktionale Verbindung ausgewählt aus der Gruppe bestehend aus Diisocyanaten, Diaminen, Diolen, Dicarbonsäuren, Diformaldehydterminierten Verbindungen und Mischungen hiervon.

Das Diisocyanat weist dabei vorzugsweise die allgemeine Formel II auf,

O=C=N-R₃-N=C=O (II)

mit

R₃ ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen.

Eine weitere bevorzugte Variante sieht vor, dass unmittelbar nach Schritt a) zu dem Zwischenprodukt der Komponenten A und B mindestens ein Kettenextender (Komponente C) mit der allgemeinen Formel III:

H-V-R₄-W-H (III)

mit
R₄ ein gegebenenfalls durch Fluor, Chlor, C₁-C₆-Alkyl- oder C₁-C₆-Alkylester substituierter Alkylenrest mit 1 bis 700 C-Atomen, in dem einander nicht benachbarte Methyleneinheiten durch Gruppen -O-, -COO-, -OCO- oder -OCOO- ersetzt sein können, und
V, W unabhängig voneinander -O- oder -NR₅-, wobei R₅ Wasserstoff, ein Alkylrest mit 1 bis 10 C-Atomen oder ein Arylrest mit 6 bis 22 C-Atomen ist, zugesetzt wird.

Als Komponente C sind Diamine und Diole, insbesondere 1,4-Butandiol, 1,6-Hexandiol, Ethylenglykol, 4,4'-Methylen-bis(2-chloranilin), besonders bevorzugt.

Weiterhin ist die Einmischung weiterer Additive, z.B. ausgewählt aus Nanofüllstoffen, Stabilisatoren, Antistatika, Flammschutzmittel, Haftvermittler, Nukleierungsmittel, Treibmittel, antibakterielle Mittel und Mischungen hiervon, möglich. Die Menge der Additive beträgt dabei bevorzugt zwischen 1 und 80 Gew.-%, bezogen auf das Gewicht des gebildeten Polymers.

Bei ökonomischer Betrachtung der eingesetzten Reaktanden, ist es verfahrenstechnisch vorteilhaft, wenn die Verbindungen der allgemeinen Formel I und die bifunktionale Verbindung in äquimolaren Verhältnissen eingesetzt werden.

Da viele der zuvor aufgezählten Edukte feuchtigkeits- bzw. luftempfindlich sind, ist es vorteilhaft, wenn das Verfahren unter Ausschluss von Feuchtigkeit und unter Schutzgas, z. B. Stickstoff oder Argon, durchgeführt wird.

Besonders hohe Ausbeuten lassen sich erzielen, wenn beim Verfahren zur Herstellung des Farb-Masterbatches ein Katalysator aus der Gruppe enthaltend Dialkylzinnverbindungen, Dibutylzinndilaurat, Dibutylzinndiacetat, tertiäre Amine, N,N-Dimethylcyclohexanamin, 2-Dimethylaminoethanol, 4-Dimethylaminopyridin und/oder Mischungen hieraus zugesetzt wird.

Ein bevorzugter Farb-Masterbatch enthält ein Blockcopolymer der allgemeinen Formel IV 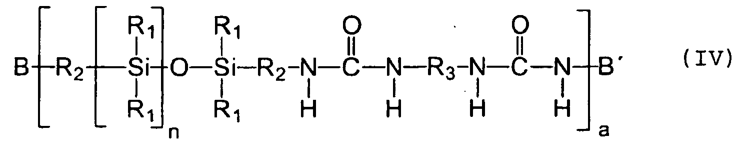 mit
R₁ unabhängig voneinander ein einwertiger gegebenenfalls durch Fluor oder Chlor substituierter Kohlenwasserstoffrest mit 1 bis 20 Kohlenstoffatomen,
R₂ unabhängig voneinander ein Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
R₃ ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen
B, B': eine reaktive oder nicht reaktive Endgruppe, welche kovalent an das Polymer gebunden ist,
n: eine Zahl von 1 bis 10000,
a: eine Zahl von mindestens 1,
   sowie mindestens ein Farbmittel.
   Ein weiterer bevorzugter Farb-Masterbatch enthält ein Blockcopolymer der allgemeinen Formel V 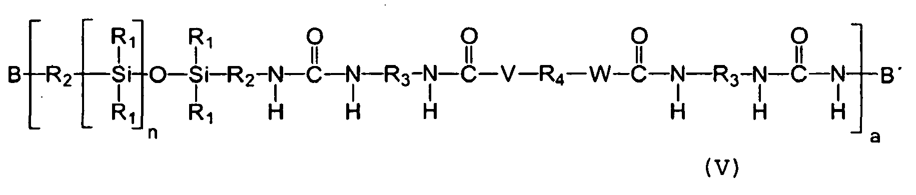 mit
R₁ unabhängig voneinander ein einwertiger gegebenenfalls durch Fluor oder Chlor substituierter Kohlenwasserstoffrest mit 1 bis 20 Kohlenstoffatomen,
R₂ unabhängig voneinander ein Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
R₃ ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen
R₄ ein gegebenenfalls durch Fluor, Chlor, C₁-C₆-Alkyl- oder C₁-C₆-Alkylester substituierter Alkylenrest mit 1 bis 700 C-Atomen, in dem einander nicht benachbarte Methyleneinheiten durch Gruppen -O-, -COO-, -OCO- oder -OCOO- ersetzt sein können, und
V, W unabhängig voneinander -O- oder -NR₅-, wobei R₅ Wasserstoff, ein Alkylrest mit 1 bis 10 C-Atomen oder ein Arylrest mit 6 bis 22 C-Atomen ist,
B, B': eine reaktive oder nicht reaktive Endgruppe, welche kovalent an das Polymer gebunden ist,
n: eine Zahl von 1 bis 10000,
a: eine Zahl von mindestens 1,
   sowie mindestens ein Farbmittel.

Weiterhin können weitere Additive, z.B. Nanofüllstoffe, Stabilisatoren, Antistatika, Flammschutzmittel, Haftvermittler, Nukleierungsmittel, Treibmittel, antibakterielle Mittel und Mischungen hiervon enthalten sein. Die Menge der Additive beträgt dabei bevorzugt 1 bis 80 Gew.-%, bezogen auf das Gewicht des gebildeten Polymers.

Ebenso wird erfindungsgemäß ein eingefärbter Polymerwerkstoff, der den erfindungsgemäßen Farb-Masterbatch enthält, bereitgestellt.

Als vorteilhaft hat sich insbesondere herausgestellt, dass der Farb-Masterbatch eine hohe Verträglichkeit mit einer Vielzahl von Polymerwerkstoffen bzw. Blends hiervon aufweist. Hierzu zählen insbesondere Polyethylen, Polypropylen, Polyamid, Polyethylenterephthalat, Polybutylenterephthalat, thermoplastische Elastomere auf Basis von vernetztem Kautschuk, Ethylen-Vinylacetat, Polyhydroxybutyrat und/oder Copolymere oder Blends hiervon.

Ebenso kann der Farb-Masterbatch auf für Polystyrol, schlagzähmodifiziertes Polystyrol, Styrol-Acrylnitril-Copolymere, Acrylnitril-Butadien-Styrol-Copolymere, Polyvinylchlorid, Polymethylmethacrylat, Polycarbonat, Polyaryletherketon, Polyacrylnitril, Polyetherimid, Polyethylennaphthalat, Polyethersulfon, Polyimid, Polyketon, Polyoxymethylen, Polyphenylensulfid, Polyphenylensulfon, Polysulfon, Styrol-Butadien-Kautschuk, Acrylnitril-Butadien-Kautschuk, Naturkautschuk und deren Copolymere oder Blends eingesetzt werden.

Die Polymerwerkstoffe sind dabei insbesondere herstellbar durch Mischen mindestens eines Polymerwerkstoffs mit dem Farb-Masterbatch in geschmolzenem Zustand und Abkühlen der Mischung.

Bevorzugt liegen die Polymerwerkstoffe in Form eines Formkörpers erhältlich durch einen formgebenden Prozess, ausgewählt aus der Gruppe bestehend aus Spritzgießen, Extrudieren, Formpressen, Walzenrotation, Rotationsformen, Lasersintern, Fused Deposition Modelling (FDM), Granulieren und/oder Gießen vor.

Die vorliegende Erfindung wird anhand der nachfolgenden, beispielhaft gehaltenen Ausführungen näher erläutert, ohne die Erfindung auf die dort dargestellten Parameter beschränken zu wollen.

Alle im Folgenden beschriebenen Versuche wurden diskontinuierlich mit einem Laborkneter der Firma Brabender (Kammervolumen ca. 50cm³) durchgeführt. Die Geschwindigkeit der Knetelemente betrug für alle Versuche 60U/min. Die Herstellung der Farb-Masterbatches erfolgte jeweils aus einer Polyadditionsreaktion von Aminopropyl-terminierten Polydimethylsiloxan (atPDMS) mit einem mittleren Molekulargewicht von 2700g/mol und Tetramethylxylen Diisocyanat (TMXDI) sowie der Zugabe von Farbpigmenten.

### Beispiel 1:

Zur Herstellung eines Farb-Masterbatches wurden 40 g des atPDMS in den auf 70 °C vortemperierten mit 60 U/min laufenden Laborkneter gegeben. Anschließend wurden 18,7 g (das entspricht 30 Gew.-% auf die Gesamtrezeptur) des anorganischen Pigmentes TiO₂ hinzugegeben und über einen Zeitraum von 300 s isotherm mit dem fluiden atPDMS gemischt. Im folgenden Arbeitsschritt wurden 3,6 g des TMXDI hinzudosiert. Nach 120 s isothermer Reaktionszeit wurde der Kneter mit 20 K/min auf 180 °C geheizt. Während des Heizens reagierten das atPDMS und das TMXDI in Anwesenheit des anorganischen Pigmentes vollständig zu einem Polysiloxan-Harnstoff-Copolymer aus. Bei 180 °C befand sich die gebildete Farb-Masterbatchmatrix im Schmelzezustand. Nach Erreichen der Temperatur von 180 °C wurde das System für weitere 180 s in der Schmelze gemischt und somit homogenisiert, anschließend dem Laborkneter entnommen und auf Raumtemperatur abgekühlt.

### Beispiel 2:

Zur Herstellung eines Farb-Masterbatches wurden 40 g des atPDMS in den auf 70 °C vortemperierten mit 60 U/min laufenden Laborkneter gegeben. Anschließend wurden 18,7 g (das entspricht 30 Gew.-% auf die Gesamtrezeptur) des organischen Pigmentes Phthalocyanin Grün Pigment hinzugegeben und über einen Zeitraum von 300 s isotherm mit dem fluiden atPDMS gemischt. Im folgenden Arbeitsschritt wurden 3,6 g des TMXDI hinzudosiert. Nach 120 s Reaktionsdauer bei konstanter Temperatur wurde der Kneter mit 20 K/min auf 180 °C geheizt. Während des Heizens reagierten das atPDMS und das TMXDI vollständig zu einem Polysiloxan-Harnstoff-Copolymer aus. Bei 180 °C befand sich die gebildete Farb-Masterbatchmatrix im Schmelzezustand. Nach Erreichen der 180 °C wurde das System für weitere 180 s in der Schmelze gemischt und somit homogenisiert, anschließend dem Laborkneter entnommen und auf Raumtemperatur abgekühlt.

### Beispiel 3:

Zur Herstellung eines Farb-Masterbatches wurden 40 g des atPDMS in den auf 70 °C vortemperierten mit 60 U/min laufenden Laborkneter gegeben. Anschließend wurden 43,6 g (das entspricht 50 Gew.-% auf die Gesamtrezeptur) des anorganischen Pigmentes TiO₂ hinzugegeben und über einen Zeitraum von 300 s isotherm mit dem fluiden atPDMS gemischt. Im folgenden Arbeitsschritt wurden 3,6 g des TMXDI hinzudosiert. Nach 120 s Reaktionsdauer bei konstanter Temperatur wurde der Kneter mit 20 K/min auf 180 °C geheizt. Während des Heizens reagierten das atPDMS und das TMXDI vollständig zu einem Polysiloxan-Harnstoff-Copolymer aus. Bei 180 °C befand sich die gebildete Farb-Masterbatchmatrix im Schmelzezustand. Nach Erreichen der 180 °C wurde das System für weitere 180 s in der Schmelze gemischt und somit homogenisiert, anschließend dem Laborkneter entnommen und auf Raumtemperatur abgekühlt.

### Beispiel 4:

Vorbereitend zur Farb-Masterbatch-Herstellung wurden 3,6 g des TMXDI mit 18,7 g des anorganischen Pigmentes TiO₂ zu einer Paste gemischt. Die Herstellung des Farb-Masterbatches erfolgte durch Dosierung von 40 g des atPDMS in den auf 70 °C vortemperierten und mit 60 U/min laufenden Laborkneter. Anschließend wurde die im ersten Schritt erzeugte Paste hinzugegeben. Nach 240 s isothermer Reaktionszeit wurde der Kneter mit 20 K/min auf 180 °C geheizt. Während des Heizens reagierten das atPDMS und das TMXDI vollständig zu einem Polysiloxan-.Harnstoff-Copolymer aus. Bei 180 °C befand sich die gebildete Farb-Masterbatchmatrix im Schmelzezustand. Nach Erreichen der 180 °C wurde das System für weitere 180 s in der Schmelze gemischt und somit homogenisiert, anschließend dem Laborkneter entnommen und auf Raumtemperatur abgekühlt.

### Beispiel 5:

Vorbereitend zur Farb-Masterbatch-Herstellung wurden 50 Gew.-% eines anorganischen Kobalt-Pigmentes auf einem Reibstuhl in das fluide atPDMS homogen eingearbeitet. Zur Herstellung eines Farb-Masterbatches wurden 70 g der Paste in den auf 70 °C vortemperierten mit 60 U/min laufenden Laborkneter gegeben. Anschließend wurden 3,2 g des TMXDI hinzudosiert. Nach 120 s Reaktionsdauer bei konstanter Temperatur wurde der Kneter mit 20 K/min auf 180 °C geheizt. Während des Heizens reagierten das atPDMS und das TMXDI in Anwesenheit des Farbmittels vollständig zu einem Polysiloxan-Harnstoff-Copolymer aus. Bei 180 °C befand sich die gebildete Farb-Masterbatchmatrix im Schmelzezustand. Nach Erreichen der 180 °C wurde das System für weitere 180 s in der Schmelze gemischt und anschließend dem Laborkneter entnommen und auf Raumtemperatur abgekühlt. Durch nachfolgendes Granulieren wurde ein rieselfähiges, klebfreies Farb-Masterbatch erhalten.

### Beispiel 6:

Vorbereitend zur Farb-Masterbatch-Herstellung wurden 40 Gew.-% eines organischen Gelb-Pigmentes auf einem Reibstuhl in das fluide atPDMS homogen eingearbeitet. Zur Herstellung eines Farb-Masterbatches wurden 55 g der Paste in den auf 70 °C vortemperierten mit 60 U/min laufenden Laborkneter gegeben. Anschließend wurden 2,6 g des TMXDI hinzudosiert. Nach 120 s Reaktionsdauer bei konstanter Temperatur wurde der Kneter mit 20 K/min auf 180 °C geheizt. Während des Heizens reagierten das atPDMS und das TMXDI in Anwesenheit des Farbmittels vollständig zu einem Polysiloxan-Harnstoff-Copolymer aus. Bei 180 °C befand sich die gebildete Farb-Masterbatchmatrix im Schmelzezustand. Nach Erreichen der 180 °C wurde das System für weitere 180 s in der Schmelze gemischt und anschließend dem Laborkneter entnommen und auf Raumtemperatur abgekühlt. Durch nachfolgendes Granulieren wurde ein rieselfähiges, klebfreies Farb-Masterbatch erhalten.

### Beispiele 7-9:

Zur Herstellung der Ausführungsbeispiele 7-9 wurden die in Beispiel 5 und 6 beschriebenen Basispasten in den Verhältnissen 20/80, 50/50 und 80/20 mit einem Gesamtgewicht von jeweils 65 g abgewogen. Anschließend wurden die Pasten in den auf 70 °C vortemperierten mit 60 U/min laufenden Laborkneter gegeben und für 120 s gemischt. Anschließend wurde die jeweils entsprechende Menge an TMXDI (2,68 g; 2,93 g; 3,16 g) hinzudosiert. Nach 120 s Reaktionsdauer bei konstanter Temperatur wurde der Kneter mit 20 K/min auf 180 °C geheizt. Während des Heizens reagierten das at PDMS und das TMXDI in Anwesenheit der unterschiedlichen Farbmittel vollständig zu einem Polysiloxan-Harnstoff-Copolymer aus. Bei 180 °C befand sich die gebildete Farb-Masterbatchmatrix im Schmelzezustand. Nach Erreichen der 180 °C wurde das System für weitere 180 s in der Schmelze gemischt und anschließend dem Laborkneter entnommen und auf Raumtemperatur abgekühlt. Die erhaltenen Farb-Masterbatches zeigten abhängig vom Mischungsverhältnis der Basispasten (blau und gelb) verschiedene Grüntöne. Durch nachfolgendes Granulieren wurde ein rieselfähiges, klebfreies Farb-Masterbatch erhalten.

## Patentansprüche

1. Verfahren zur Herstellung eines Farb-Masterbatches mit folgenden Schritten:
a) Mischen mindestens einer mit einer Amino-, Hydroxy- oder Carboxy-Gruppe terminierten Siloxanstruktur der allgemeinen Formel I (Komponente A): 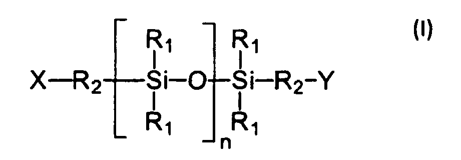 mit
R₁ unabhängig voneinander ein einwertiger gegebenenfalls durch Fluor oder Chlor substituierter Kohlenwasserstoffrest mit 1 bis 20 Kohlenstoffatomen,
R₂ unabhängig voneinander ein Alkylenrest mit 1 bis 20 Kohlenstoffatomen, in dem einander nicht benachbarte Methyleneinheiten durch Gruppen -O- ersetzt sein können oder einen Arylenrest mit 6 bis 22 Kohlenstoffatomen,
X und Y unabhängig voneinander eine Hydroxy-, Carboxy- oder Amino-Gruppe NH₂ und
n eine Zahl von 1 bis 10000,
mit mindestens einer bifunktionellen Verbindung (Komponente B), die zwei, mit X und Y durch Polyaddition oder Polykondensation verknüpfbare Gruppen aufweist,
b) Polymerbildung der Mischung der Komponenten A und B sowie
c) Aufschmelzen des Polymerisats im Extruder oder diskontinuierlichen Innenmischer mit anschließender Granulation,
**dadurch gekennzeichnet,**
**dass** vor Abschluss der Polymerbildung mindestens ein Farbmittel in eine der flüssigen Vorstufen des Polymers unter Bildung einer Paste zugesetzt wird.

2. Verfahren nach Anspruch 1,
**dadurch gekennzeichnet, dass** das mindestens eine Farbmittel vor oder während Schritt a) zugesetzt wird, insbesondere durch Einmischen und/oder durch Extrusion.

3. Verfahren nach einem der vorhergehenden Ansprüche,
**dadurch gekennzeichnet, dass** 1 bis 80 Gew.-%, bevorzugt 10 bis 50 Gew.-%, bezogen auf das Gewicht des gebildeten Polymers, des mindestens einen Farbmittels zugegeben wird.

4. Verfahren nach einem der vorhergehenden Ansprüche,
**dadurch gekennzeichnet, dass** das bifunktionale Monomer (Komponente B) ausgewählt ist aus der Gruppe bestehend aus Diisocyanaten, Diaminen, Diolen, Dicarbonsäuren, Diformaldehyd-terminierten Verbindungen und Mischungen hiervon, insbesondere ein Diisocyanat der allgemeinen Formel II:
O=C=N-R₃-N=C=O (II)
mit
R₃ ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen.

5. Verfahren nach einem der vorhergehenden Ansprüche,
**dadurch gekennzeichnet, dass** die Farbmittel ausgewählt sind aus der Gruppe bestehend aus Pigmenten, Farbstoffen und Mischungen hiervon.

6. Verfahren nach einem der vorhergehenden Ansprüche,
**dadurch gekennzeichnet, dass** unmittelbar nach Schritt a) zu dem Zwischenprodukt der Komponenten A und B mindestens ein Kettenextender (Komponente C) mit der allgemeinen Formel III:
H-V-R₄-W-H (III)
mit
R₄ ein gegebenenfalls durch Fluor, Chlor, C₁-C₆-Alkyl- oder C₁-C₆-Alkylester substituierter Alkylenrest mit 1 bis 700 C-Atomen, in dem einander nicht benachbarte Methyleneinheiten durch Gruppen -0-, - COO-, -OCO- oder -OCOO- ersetzt sein können, und
V, W unabhängig voneinander -O- oder -NR₅-, wobei R₅ Wasserstoff, ein Alkylrest mit 1 bis 10 C-Atomen oder ein Arylrest mit 6 bis 22 C-Atomen ist,
zugesetzt wird.

7. Verfahren nach einem der vorhergehenden Ansprüche,
**dadurch gekennzeichnet, dass** in Schritt a) und/oder Schritt c) weitere Additive ausgewählt aus der Gruppe bestehend aus Nanofüllstoffen, Stabilisatoren, Antistatika, Flammschutzmittel, Haftvermittler, Nukleierungsmittel, Treibmittel, antibakterielle Mittel und Mischungen hiervon zugesetzt werden.

8. Verfahren nach dem vorhergehenden Anspruch,
**dadurch gekennzeichnet, dass** die Additive in einem Gewichtsanteil zwischen 1 und 80 Gew.-%, bezogen auf das Gewicht des gebildeten Polymers, zugesetzt werden.

9. Verfahren nach einem der vorhergehenden Ansprüche,
**dadurch gekennzeichnet, dass** die Verbindungen der allgemeinen Formel I (komponente A) und die bifunktionale Verbindung (Komponente B) in äquimolaren Verhältnissen eingesetzt werden.

10. Verfahren nach einem der vorhergehenden Ansprüche,
**dadurch gekennzeichnet, dass** das Verfahren unter Ausschluss von Feuchtigkeit und unter Schutzgas, insbesondere Stickstoff und Argon, durchgeführt wird.

11. Farb-Masterbatch in Granulat-Form herstellbar nach einem der vorhergehenden Ansprüche, enthaltend ein Blockcopolymer der allgemeinen Formel IV 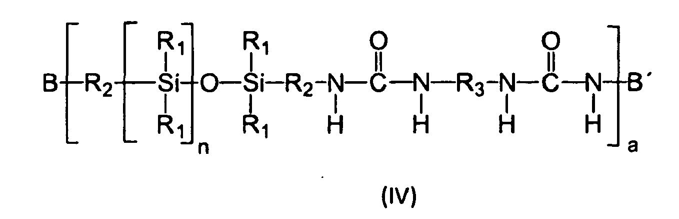 mit
R₁ unabhängig voneinander ein einwertiger gegebenenfalls durch Fluor oder Chlor substituierter Kohlenwasserstoffrest mit 1 bis 20 Kohlenstoffatomen,
R₂ unabhängig voneinander ein Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
R₃ ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen
B, B': eine reaktive oder nicht reaktive Endgruppe, welche kovalent an das Polymer gebunden ist,
n: eine Zahl von 1 bis 10000 und
a: eine Zahl von mindestens 1,
sowie mindestens ein Farbmittel oder ein Blockcopolymer der allgemeinen Formel V 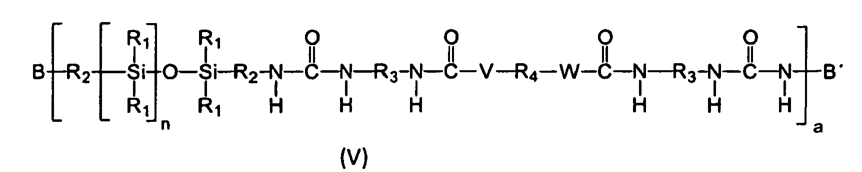 mit
R₁ unabhängig voneinander ein einwertiger gegebenenfalls durch Fluor oder Chlor substituierter Kohlenwasserstoffrest mit 1 bis 20 Kohlenstoffatomen,
R₂ unabhängig voneinander ein Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
R₃ ein gegebenenfalls durch Fluor oder Chlor substituierter Alkylenrest mit 1 bis 20 Kohlenstoffatomen, in dem einander nicht benachbarte Methyleneinheiten durch Gruppen -O- ersetzt sein können oder ein Arylenrest mit 6 bis 22 Kohlenstoffatomen,
R₄ ein gegebenenfalls durch Fluor, Chlor, C₁-C₆-Alkyl- oder C₁-C₆-Alkylester substituierter Alkylenrest mit 1 bis 700 C-Atomen, in dem einander nicht benachbarte Methyleneinheiten durch Gruppen -O-, - COO-, -OCO- oder -OCOO- ersetzt sein können, V, W unabhängig voneinander -O- oder -NR₅-, wobei R₅ Wasserstoff, ein Alkylrest mit 1 bis 10 C-Atomen oder ein Arylrest mit 6 bis 22 C-Atomen ist,
B, B': eine reaktive oder nicht reaktive Endgruppe, welche kovalent an das Polymer gebunden ist,
n: eine Zahl von 1 bis 10000,
a: eine Zahl von mindestens 1,
sowie mindestens ein Farbmittel.

12. Polymerwerkstoff enthaltend den Farb-Masterbatch nach Anspruch 11.

13. Polymerwerkstoff nach Anspruch 12,
**dadurch gekennzeichnet, dass** der Polymerwerkstoff ausgewählt ist aus der Gruppe bestehend aus Thermoplasten, thermoplastischen Elastomeren, Elastomeren, Duromeren und/oder Copolymeren oder Blends hiervon, insbesondere Polyethylen, Polypropylen, Polyamid, Polyethylenterephthalat, Polybutylenterephthalat, thermoplastische Elastomere auf Basis von vernetztem Kautschuk, Ethylen-Vinylacetat, Polyhydroxybutyrat und/oder Copolymeren oder Blends hiervon.

14. Polymerwerkstoff nach einem der Ansprüche 12 oder 13,
**dadurch gekennzeichnet, dass** der Polymerwerkstoff in Form eines durch formgebende Prozesse, insbesondere Spritzgießen, Extrudieren, Formpressen, Walzenrotation, Rotationsformen, Lasersintern, FDM, Granulieren und/oder Gießen, erhältlichen Formkörpers vorliegt.

15. Verwendung des Farb-Masterbatches nach Anspruch 11 zur Einfärbung von Polymerwerkstoffen.

## Claims

1. A method of manufacturing a colour master batch comprising the following steps:
a) mixing at least one siloxane structure terminated with an amino group, hydroxyl group or carboxyl group of the general formula I (component A): 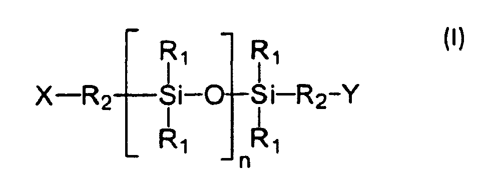 where
R₁ is, independently of each other, a univalent hydrocarbon residue, optionally substituted by fluorine or chlorine, having 1 to 20 carbon atoms;
R₂ is, independently of each other, an alkylene residue having 1 to 20 carbon atoms in which mutually non-adjacent methylene units can be replaced with groups -0- or an arylene residue having 6 to 22 carbon atoms;
X and Y are, independently of each other, a hydroxyl group, carboxyl group or amino group NH₂; and
n is a number from 1 to 10,000;
having at least one bifunctional compound (component B) which has two groups which can be linked with X and Y by polyaddition or polycondensation;
b) polymer formation of the mixture of the components A and B; and
c) melting the polymerisate in the extruder or in the discontinuous internal mixer with subsequent granulation,
**characterised in that**
at least one colourant is added into one of the liquid precursors of the polymer before the end of the polymer formation while forming a paste.

2. A method in accordance with claim 1, **characterised in that** at least one colourant is added before or during step a), in particular by mixing in and/or by extrusion.

3. A method in accordance with one of the preceding claims, **characterised in that** 1 to 80% by weight, preferably 10 to 50% by weight, with respect to the weight of the polymer formed, of the at least one colourant is added.

4. A method in accordance with one of the preceding claims, **characterised in that** the bifunctional monomer (component B) is selected from the group comprising diisocyanates, diamines, diols, dicarboxylic acids, diformaldehyde-terminated compounds and mixtures hereof, in particular diisocyanate of the general formula II:
**O=C=N-R₃-N=C=O** **(II)**
where
R₃ is an alkylene residue, optionally substituted by fluorine or chlorine, having 1 to 20 carbon atoms in which mutually non-adjacent methylene units can be replaced with groups -O- or an arylene residue having 6 to 22 carbon atoms.

5. A method in accordance with one of the preceding claims, **characterised in that** the colourants are selected from the group comprising pigments, dyes and mixtures thereof.

6. A method in accordance with one of the preceding claims, **characterised in that** at least one chain extender (component C) having the general formula III:
**H-V-R₄-W-H** **(III)**
where
R₄ is an alkylene residue, optionally substituted by fluorine, chlorine, C₁C₆-alkyl or C₁-C₆ alkyl ester, having 1 to 700 C atoms in which mutually non-adjacent methylene units can be replaced with groups -O-, -COO-, -OCO- or -OCOO; and
V, W are, independently of each other, -O- or -NR₅-, with R₅ being hydrogen, an alkyl residue having 1 to 10 C atoms or an aryl residue having 6 to 22 C atoms,
is added to the intermediate product of components A and B directly after step a).

7. A method in accordance with one of the preceding claims, **characterised in that** further additives selected from the group comprising nanofillers, stabilisers, antistatic agents, flame inhibitors, adhesion promotors, nucleation agents, blowing agents, antibacterial agents and mixtures thereof are added in steps a) and/or step c).

8. A method in accordance with the preceding claim, **characterised in that** the additives are added in a weight portion between 1 and 80% by weight, relative to the weight of the polymer formed.

9. A method in accordance with one of the preceding claims, **characterised in that** the compounds of the general formula I (component A) and the bifunctional compound (component B) are used in equimolar ratios.

10. A method in accordance with one of the preceding claims, **characterised in that** the method is carried out to the exclusion of moisture and under a protective gas, in particular nitrogen and argon.

11. A colour masterbatch in granulate form which can be manufactured in accordance with one of the preceding claims, comprising a block copolymer of the general formula IV 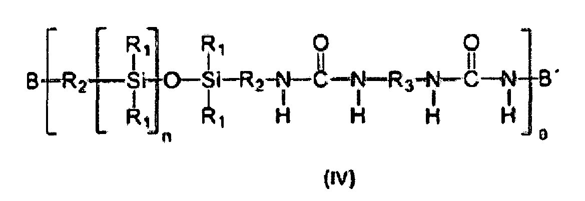 where
R1 is, independently of each other, a univalent hydrocarbon residue, optionally substituted by fluorine or chlorine, having 1 to 20 carbon atoms;
R₂ is, independently of each other, an alkylene residue having 1 to 20 carbon atoms in which mutually non-adjacent methylene units can be replaced with groups -O- or an arylene residue having 6 to 22 carbon atoms;
R₃ is an alkylene residue, optionally substituted by fluorine or chlorine, having 1 to 20 carbon atoms in which mutually non-adjacent methylene units can be replaced with groups -O- or an arylene residue having 6 to 22 carbon atoms;
B, B' : a reactive or non-reactive end group which is bound covalently to the polymer;
n: a number from 1 to 10,000; and
a: a number of at least 1;
and at least one colourant or one block copolymer of the general formula V 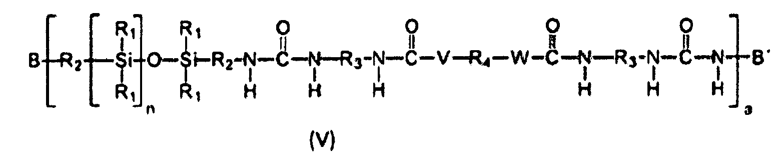 where
R₁ is, independently of each other, a univalent hydrocarbon residue, optionally substituted by fluorine or chlorine, having 1 to 20 carbon atoms;
R₂ is, independently of each other, an alkylene residue having 1 to 20 carbon atoms in which mutually non-adjacent methylene units can be replaced with groups -O- or an arylene residue having 6 to 22 carbon atoms;
R₃ is an alkylene residue, optionally substituted by fluorine or chlorine, having 1 to 20 carbon atoms in which mutually non-adjacent methylene units can be replaced with groups -O- or an arylene residue having 6 to 22 carbon atoms;
R₄ is an alkylene residue, optionally substituted by fluorine, chlorine, C₁-C₆ alkyl ester or C₁-C₆ alkyl ester, having 1 to 700 C atoms in which mutually non-adjacent methylene units can be replaced with groups -O-, -COO-, -OCO- or -OCOO-;
V, W are, independently of each other, -O- or -NR₅-, with R₅ being hydrogen, an alkyl residue having 1 to 10 C atoms or an aryl residue having 6 to 22 C atoms, B, B' : a reactive or non-reactive end group which is bound covalently to the polymer;
n: a number from 1 to 10,000;
a: a number of at least 1;
and at least one colourant.

12. A polymer material comprising the colour masterbatch in accordance with claim 11.

13. A polymer material in accordance with claim 12, **characterized in that** the polymer material is selected from the group comprising thermoplastics, thermoplastic elastomers, elastomers, duromers and/or copolymers or blends hereof, in particular polyethylene, polypropylene, polyamide, polyethylene terephthalate, polybutylene terephthalate, thermoplastic elastomers based on cross-linked rubber, ethylene vinyl acetate, polyhydroxybutyrate and/or copolymers or blends hereof.

14. A polymer material in accordance with one of the claims 12 or 13, **characterised in that** the polymer material is present in the form of a moulded body obtainable by moulding processes, in particular injection moulding, extrusion, compression moulding, roller rotation, rotational moulding, laser sintering, FDM, granulation and/or casting.

15. Use of the colour masterbatch in accordance with claim 11 for colouring polymer materials.

## Revendications

1. Procédé de fabrication d'un mélange maître colorant comprenant les étapes suivantes :
a) le mélange d'au moins une structure siloxane terminée par un groupe amino, hydroxy ou carboxy de formule générale I (composant A) : 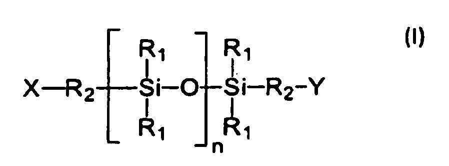 où
les R₁ représentent indépendamment les uns des autres un radical hydrocarboné monovalent éventuellement substitué par le fluor ou le chlore, avec 1 à 20 atomes de carbone,
les R₂ représentent indépendamment les uns des autres un radical alkylène avec 1 à 20 atomes de carbone, dans lequel des unités méthylène non voisines les unes des autres peuvent être remplacées par des groupes -O-, ou un radical arylène avec 6 à 22 atomes de carbone,
X et Y représentent indépendamment l'un de l'autre un groupe hydroxy, carboxy ou amino NH₂, et
n représente un nombre de 1 à 10 000,
avec au moins un composé bifonctionnel (composant B), qui présente deux groupes reliables à X et Y par polyaddition ou polycondensation,
b) la polymérisation du mélange des composants A et B, ainsi que
c) la fusion du polymérisat dans une extrudeuse ou un mélangeur interne discontinu avec granulation ultérieure,
**caractérisé en ce qu'**avant la fin de la polymérisation, au moins un colorant est ajouté à un des précurseurs liquides du polymère avec formation d'une pâte.

2. Procédé selon la revendication 1, **caractérisé en ce que** le au moins un colorant est ajouté avant ou pendant l'étape a), en particulier par mélange et/ou par extrusion.

3. Procédé selon l'une quelconque des revendications précédentes, **caractérisé en ce que**, par rapport au poids du polymère formé, 1 à 80 % en poids, de préférence 10 à 50 % en poids, du au moins un colorant est ajouté.

4. Procédé selon l'une quelconque des revendications précédentes, **caractérisé en ce que** le monomère bifonctionnel (composant B) est choisi dans le groupe constitué par les diisocyanates, les diamines, les diols, les acides dicarboxyliques, les composés à terminaison diformaldéhyde et leurs mélanges, en particulier un diisocyanate de formule générale II :
**O=C=N-R₃-N=C=O** **(II)**
où
R₃ représente un radical alkylène éventuellement substitué par le fluor ou le chlore, avec 1 à 20 atomes de carbone, dans lequel des unités méthylène non voisines les unes des autres peuvent être remplacées par des groupes -O-, ou un radical arylène avec 6 à 22 atomes de carbone.

5. Procédé selon l'une quelconque des revendications précédentes, **caractérisé en ce que** les colorants sont choisis dans le groupe constitué par les pigments, les teintures et leurs mélanges.

6. Procédé selon l'une quelconque des revendications précédentes, **caractérisé en ce que** directement après l'étape a) est ajouté au produit intermédiaire des composants A et B au moins un allongeur de chaîne (composant C) de formule générale III :
**H-V-R₄-W-H** **(III)**
où
R₄ représente un radical alkylène avec 1 à 700 atomes C éventuellement substitué par le fluor, le chlore, un alkyle en C₁-C₆ ou un ester alkylique en C₁-C₆, dans lequel des unités méthylène non voisines les unes des autres peuvent être remplacées par des groupes -O-, - COO-, -OCO- ou -OCOO-, et
V, W représentent indépendamment l'un de l'autre -O- ou -NR₅-, R₅ représentant l'hydrogène, un radical alkyle avec 1 à 10 atomes C ou un radical aryle avec 6 à 22 atomes C.

7. Procédé selon l'une quelconque des revendications précédentes, **caractérisé en ce qu'**à l'étape a) et/ou l'étape c), des additifs supplémentaires choisis dans le groupe constitué par les nanocharges, les stabilisateurs, les antistatiques, les agents ignifuges, les promoteurs d'adhésion, les agents de nucléation, les agents gonflants, les agents antibactériens et leurs mélanges sont ajoutés.

8. Procédé selon la revendication précédente, **caractérisé en ce que** les additifs sont ajoutés en une proportion en poids comprise entre 1 et 80 % en poids par rapport au poids du polymère formé.

9. Procédé selon l'une quelconque des revendications précédentes, **caractérisé en ce que** les composés de formule générale I (composant A) et le composé bifonctionnel (composant B) sont utilisés dans des proportions équimolaires.

10. Procédé selon l'une quelconque des revendications précédentes, **caractérisé en ce que** le procédé est réalisé avec exclusion de l'humidité et sous un gaz protecteur, en particulier l'azote et l'argon.

11. Mélange maître colorant sous forme granulaire pouvant être fabriqué selon l'une quelconque des revendications précédentes, contenant un copolymère séquencé de formule générale IV 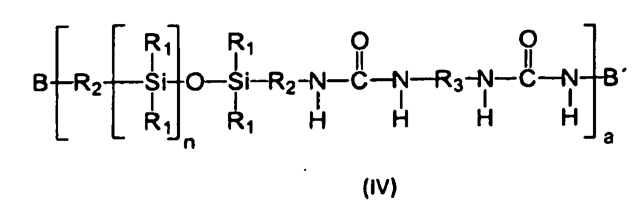 où
les R₁ représentent indépendamment les uns des autres un radical hydrocarboné monovalent éventuellement substitué par le fluor ou le chlore, avec 1 à 20 atomes de carbone,
les R₂ représentent indépendamment les uns des autres un radical alkylène avec 1 à 20 atomes de carbone, dans lequel des unités méthylène non voisines les unes des autres peuvent être remplacées par des groupes -O- ou un radical arylène avec 6 à 22 atomes de carbone,
R₃ représente un radical alkylène éventuellement substitué par le fluor ou le chlore, avec 1 à 20 atomes de carbone, dans lequel des unités méthylène non voisines les unes des autres peuvent être remplacées par des groupes -O- ou un radical arylène avec 6 à 22 atomes de carbone,
B, B' : un groupe terminal réactif ou non réactif, qui est relié au polymère de manière covalente,
n : un nombre de 1 à 10 000 et
a : un nombre supérieur ou égal à 1,
ainsi qu'au moins un colorant ou un copolymère séquencé de formule générale V 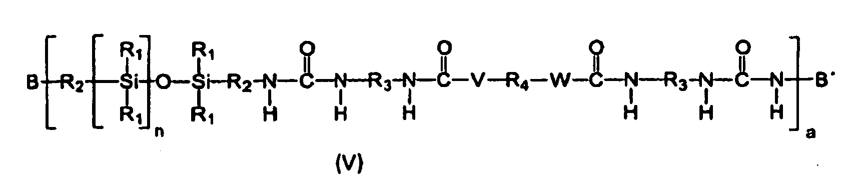 où
les R₁ représentent indépendamment les uns des autres un radical hydrocarboné monovalent éventuellement substitué par le fluor ou le chlore, avec 1 à 20 atomes de carbone,
les R₂ représentent indépendamment les uns des autres un radical alkylène avec 1 à 20 atomes de carbone, dans lequel des unités méthylène non voisines les unes des autres peuvent être remplacées par des groupes -O- ou un radical arylène avec 6 à 22 atomes de carbone,
R₃ représente un radical alkylène éventuellement substitué par le fluor ou le chlore, avec 1 à 20 atomes de carbone, dans lequel des unités méthylène non voisines les unes des autres peuvent être remplacées par des groupes -O- ou un radical arylène avec 6 à 22 atomes de carbone,
R₄ représente un radical alkylène avec 1 à 700 atomes C éventuellement substitué par le fluor, le chlore, un alkyle en C₁-C₆ ou un ester alkylique en C₁-C₆, dans lequel des unités méthylène non voisines les unes des autres peuvent être remplacées par des groupes -O-, - COO-, -OCO- ou -OCOO-,
V, W représentent indépendamment l'un de l'autre -O- ou -NR₅-, R₅ représentant l'hydrogène, un radical alkyle avec 1 à 10 atomes C ou un radical aryle avec 6 à 22 atomes C,
B, B' : un groupe terminal réactif ou non réactif, qui est relié au polymère de manière covalente,
n : un nombre de 1 à 10 000
a : un nombre supérieur ou égal à 1,
ainsi qu'au moins un colorant.

12. Matériau polymère contenant le mélange maître colorant selon la revendication 11.

13. Matériau polymère selon la revendication 12, **caractérisé en ce que** le matériau polymère est choisi dans le groupe constitué par les thermoplastiques, les élastomères thermoplastiques, les élastomères, les duromères et/ou leurs copolymères ou leurs mélanges, notamment le polyéthylène, le polypropylène, le polyamide, le polyéthylène téréphtalate, le polybutylène téréphtalate, les élastomères thermoplastiques à base de caoutchouc réticulé, l'éthylène-acétate de vinyle, le polyhydroxybutyrate et/ou leurs copolymères ou leurs mélanges.

14. Matériau polymère selon l'une quelconque des revendications 12 ou 13, **caractérisé en ce que** le matériau polymère se présente sous la forme d'un corps moulé pouvant être obtenu par des procédés de façonnage, notamment par moulage par injection, extrusion, moulage par compression, rotation de cylindres, moulage par rotation, frittage laser, prototypage rapide par dépôt de fil fondu, granulation et/ou coulage.

15. Utilisation du mélange maître colorant selon la revendication 11 pour la coloration de matériaux polymères.
